# EUROPEAN PATENT SPECIFICATION

(11) **EP 2 541 025 B1**
(45) Date of publication and mention of the grant of the patent: **08.01.2025**
(21) Application number: 12159756.1
(22) Date of filing: 15.03.2012
(51) Int. Cl.: F02D 33/00, F02D 17/04, F02D 41/02, F02N 11/08

(54) **Control apparatus for a vehicle**
Steuervorrichtung für ein Fahrzeug
Appareil de commande pour véhicule

(30) Priority: 09.06.2011 JP 2011129067
(43) Date of publication of application: 02.01.2013
(73) Proprietor: Mitsubishi Jidosha Kogyo Kabushiki Kaisha, Tokyo 108-8410 (JP)
(72) Inventor: Funakoshi, Hiroshi, Tokyo, 108-8410 (JP); Tamura, Masahiro, Tokyo, 108-8410 (JP); Takaishi, Hideyuki, Tokyo, 108-8410 (JP); Suganuma, Takayuki, Tokyo, 108-8410 (JP)
(74) Representative: Vossius & Partner Patentanwälte Rechtsanwälte mbB

(56) References cited:
- EP-A2- 1 985 824
- DE-T5- 112007 000 213
- US-A1- 2002 161 507

## Description

The present invention relates to control technology for vehicles equipped with a device that reduces the amount of fuel consumed by an internal combustion engine.

Conventionally known as a device for improving automobile fuel consumption is an idling stop control device that shuts off the internal combustion engine when an automobile comes to a halt at intersections or the like.

The idling stop control device automatically stops the idling of the internal combustion engine when a predetermined shutdown condition is satisfied, such as in a case where a vehicle comes to a halt at intersections. Thereafter, when a predetermined restart condition is satisfied, the idling stop control device restarts the engine and moves the vehicle.

Furthermore, there is a technology of regulating the automatic shutdown of the internal combustion engine, which is carried out by the idling stop control device according to the slope of the ground surface in vehicles equipped with the idling stop control device. If the automatic stop of the internal combustion engine is regulated when the road surface gradient is equal to or larger than the predetermined value, it is possible to discourage a reduction in hydraulic pressures supplied to a braking device and a transmission, and prevent an unanticipated movement of the vehicle before the hydraulic pressures are obtained at the time of restart (Unexamined Japanese Patent Publication No. 2005-207327).
Known embodiments of the state of the art are disclosed for example in JP2000204994A1 or DE112007000213T5.

An neutral-at-idle control device is also known as a device for improving automobile fuel consumption.

The neutral-at-idle control device automatically shifts the transmission into neutral when a predetermined neutral control condition is satisfied during the idling operation of the internal combustion engine, to thereby improve the fuel consumption during the idling operation.

Vehicles equipped with the idling stop control device described in the above publication or with the neutral-at-idle control device are sometimes provided with a braking system in order to prevent the movement of the vehicles even if the internal combustion engine is automatically stopped or if the transmission is shifted into neutral, in a situation where the vehicles come to a halt in a sloping ground whose slope is smaller than the predetermined value.

Even if being provided with the braking system, however, the vehicle may not be satisfactorily braked by the braking system especially when vehicle weight is large as in the case where the vehicle is being towed. In such a case, the vehicle possibly makes an unanticipated movement when the driver releases a service brake after stopping the vehicle in a sloping ground.

It is an object of the invention to provide a control apparatus for a vehicle, which is capable of avoiding an unanticipated movement of a vehicle without fail when the vehicle is stopped in a sloping ground.

The object of the invention is achieved by the features of independent claim 1. A further preferred embodiment of the present invention is defined in dependent claim 2.

In order to achieve the above object, the invention is a control apparatus for a vehicle with an automatic transmission. The control apparatus having an idle stop control device for reducing consumed fuel of an internal combustion engine of a vehicle when predetermined conditions are satisfied, which include at least a condition that the vehicle is at rest; a road surface gradient detector for detecting the slope of the ground surface on which the vehicle is stopped; a standing time measuring unit for measuring the time that elapses after the vehicle is stopped; and idling stop inhibition controller for regulating the consumed fuel reduction performed by the idling stop control device, wherein
the idling stop inhibition controller inhibits idling stop control executed by the idle stop control device if the stop time measured by the standing time measuring unit is more than predetermined time. The predetermined time is designed to decrease along with increase in the road surface gradient detected by the road surface gradient detector, if the road surface gradient detector determines that the vehicle is on a slope way.

This way, if the predetermined conditions are not satisfied when the predetermined time elapses after the vehicle is stopped in a sloping ground whose slope is smaller than the predetermined value, the consumed fuel reduction made by the idling stop control device is regulated by the idling stop inhibition controller. This prevents an unanticipated movement of the vehicle, attributable to fuel reduction.

Preferably, if the road surface gradient detected by the road surface gradient detector is larger than the predetermined value, the idling stop inhibition controller regulates the consumed fuel reduction made by the idling stop control device, regardless of the stop time.

By so doing, when the vehicle is stopped in a sloping ground whose slope is larger than the predetermined value, the consumed fuel reduction made by the idling stop control device is regulated by the idling stop inhibition controller. The vehicle is thus prevented without fail from making the unanticipated movement.

The predetermined time is determined on the basis of the road surface gradient detected by the road surface gradient detector.

Since the predetermined time serving as a threshold value of the time that elapses after the vehicle is stopped is determined on the basis of the road surface gradient detected by the road surface gradient detector, the consumed fuel reduction made by the idling stop inhibition controller is regulated with higher accuracy according to the road surface gradient.

The predetermined time is designed to decrease along with increase in the road surface gradient detected by the road surface gradient detector.

This way, the predetermined time is designed to decrease along with increase in the road surface gradient. It is then possible to more reliably prevent the unanticipated movement of the vehicle.

Preferably, the idling stop control device is idling stop control device that automatically shuts off the internal combustion engine of the vehicle when predetermined shutdown conditions are satisfied, which include at least a condition that the vehicle is at rest.

The idling stop control device automatically shuts off the internal combustion engine of the vehicle when the predetermined shutdown conditions are satisfied, such that the consumed fuel is more reliably reduced.

The present invention will become more fully understood from the detailed description given hereinafter and the accompanying drawings which are given by way of illustration only, and thus, are not limitative of the present invention, and wherein:
FIG. 1 is a schematic configuration view of a control apparatus for a vehicle according to an embodiment of the invention;
FIG. 2 is a flowchart showing a routine of determination between execution and cancellation of idling stop control and neutral-at-idle control;
FIG. 3 is a flowchart showing a routine of determination between execution and cancellation of idling stop control and neutral-at-idle control;
FIG. 4 is a flowchart showing a routine of determination between execution and cancellation of idling stop control and neutral-at-idle control;
FIG. 5 is a flowchart showing a subroutine of a process of judging the executability of automatic stop of the engine;
FIG. 6 is a flowchart showing a subroutine of a process of judging the necessity of automatic start of the engine;
FIG. 7 is a flowchart showing a subroutine of a process of judging the executability of neutral-at-idle control; and
FIG. 8 is a flowchart showing a subroutine of a process of judging the necessity of cancellation of neutral-at-idle control.

An embodiment of the invention will be described below with reference to the attached drawings.

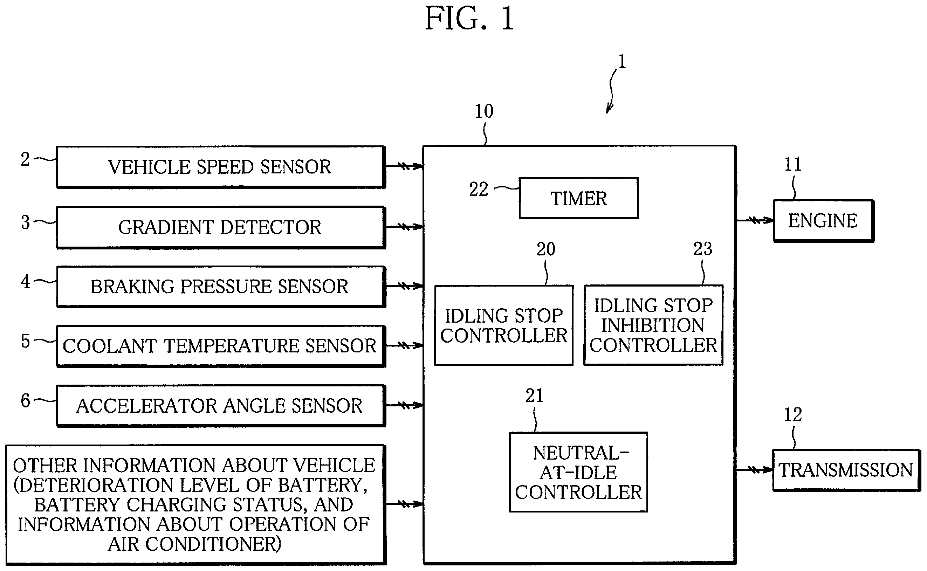

FIG. 1 is a configuration view of a control apparatus 1 for a vehicle according to the embodiment of the invention.

A vehicle equipped with the control apparatus 1 of the invention has a well-known idling stop control device and a well-known neutral-at-idle control device as fuelconsumption reduction controlling device.

The idling stop control device automatically stops the operation of an engine 11 (internal combustion engine) when predetermined idling stop conditions (shutdown conditions) are satisfied, such as in a case where the vehicle comes to a halt at intersections (idling stop control). Thereafter, when a predetermined restart condition is satisfied, the idling stop control device automatically restarts the engine 11 and moves the vehicle.

The idling stop conditions include not only basic start conditions, such as that vehicle speed is zero, and that a brake (service brake of the vehicle) is on, but also the state of operating oil pressure of the brake, engine temperature, battery condition, a demand for activation of an air conditioner, accelerator angle, etc.

The neutral-at-idle control device automatically shifts a transmission 12 into neutral when predetermined neutral control conditions are satisfied as in a case where the vehicle is stopped at intersections (neutral-at-idle control).

The neutral control conditions include not only basic start conditions, such as that the vehicle speed is zero, and that the brake is on, but also the state of operating oil pressure of the brake, engine temperature, accelerator angle, etc.

The idling stop conditions includes more items than the neutral control conditions do, and are therefore more difficult to be satisfied. This is because the idling stop control differs from the neutral-at-idle control in that the engine is stopped, and therefore, the idling stop control needs to be designed so that the vehicle's service brake and the like can operate even when the engine is stopped. On the other hand, the idling stop control is more effective in fuel consumption improvement, as compared to the neutral-at-idle control.

As shown in FIG. 1, the vehicle of the embodiment has a vehicle speed sensor 2 that detects the vehicle speed, a gradient detector 3 (road surface gradient detector) that detects an inclination angle **θ** of the vehicle as road surface gradient, a braking pressure sensor 4 that detects a brake master cylinder hydraulic pressure P of the service brake, a coolant temperature sensor 5 that detects the coolant temperature of the engine, an accelerator angle sensor 6 that detects accelerator angle, and an electronic control unit (hereinafter, referred to as ECU 10) having a controller of the idling stop control device and the neutral-at-idle control device.

The ECU 10 is formed of an input/output device, a memory device (ROM, RAM, nonvolatile RAM, etc.), a central processing unit (CPU), and the like.

The vehicle speed sensor 2, the gradient detector 3, the braking pressure sensor 4, and the coolant temperature sensor 5 are electrically connected to the input side of the ECU 10. Information detected by the above-mentioned sensors is inputted to the ECU 10. Also inputted at the same time is information about the vehicle, which relates to the idling stop conditions and the neural conditions including a deterioration level of a battery of the vehicle, battery charging status, information about operation of an air conditioner's activation switch, etc.

The engine 11 and the transmission 12 are connected to the output side of the ECU 10 so that the activation of the engine 11 and the transmission 12 may be controlled.

The ECU 10 is provided with an idling stop controller 20 (idling stop control device) functioning as a controller of the idling stop device, a neutral-at-idle controller 21 functioning as a controller of the neutral-at-idle control device, a timer 22 (vehicle standing time measuring unit), and an idling stop inhibition controller 23 (fuel-reduction regulating device) that inhibits the idling stop control executed by the idling stop controller 20.

The timer 22 has a function of measuring post-stop elapsed time Ts that is the time that elapses after the vehicle is stopped.

Based upon the inputted information, the ECU 10 controls the execution and cancellation of the idling stop control and the neutral-at-idle control.

According to the present embodiment, if the road surface gradient **θ** is equal to or larger than predetermined slope **θ**1, the ECU 10 does not execute the idling stop control and the neutral-at-idle control. Furthermore, when the idling stop conditions are not satisfied before predetermined time elapses after the vehicle is stopped, the ECU 10 does not execute the idling stop control unless the vehicle speed is equal to or higher than predetermined speed V1.

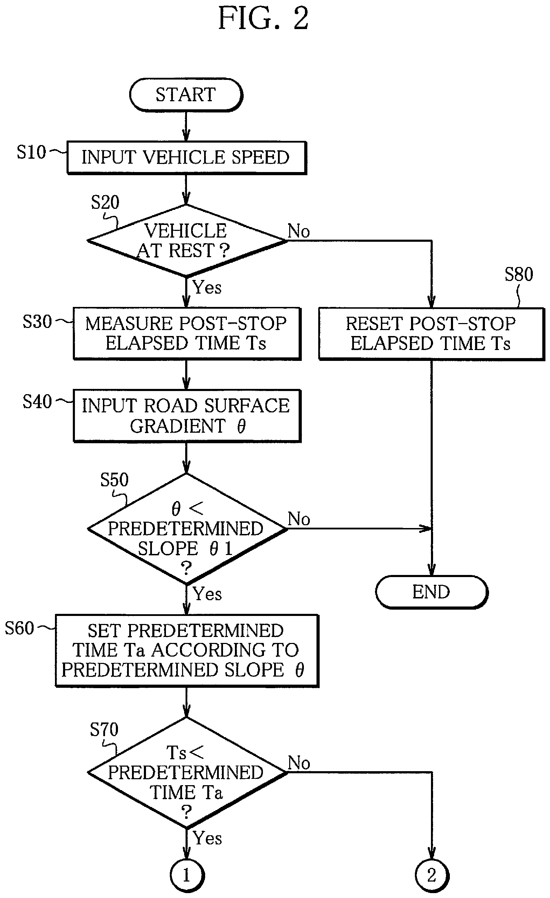

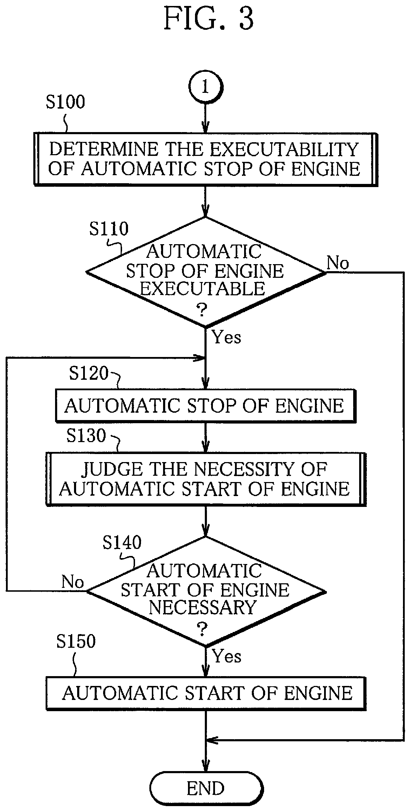

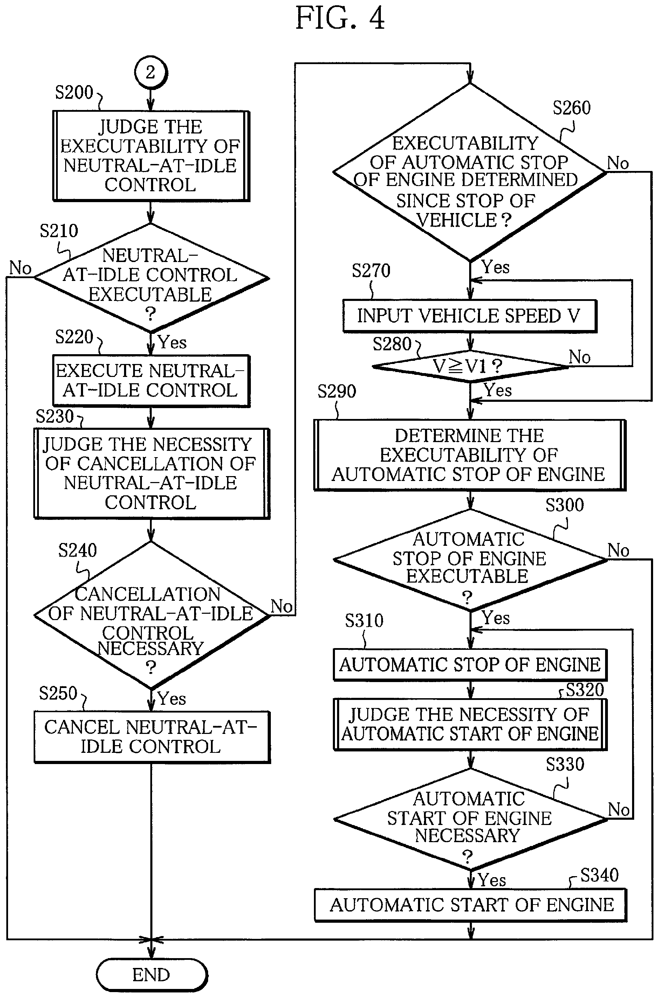

FIGS. 2 to 4 are flowcharts showing routines of determination between execution and cancellation of the idling stop control and the neutral-at-idle control. FIG. 3 shows the routine of determination between execution and cancellation of the idling stop control in the case where the post-stop elapsed time Ts is equal to or less than predetermined time Ta. FIG. 4 shows the routine of determination between execution and cancellation of the idling stop control and the neutral-at-idle control in the case where the post-stop elapsed time Ts is more than the predetermined time Ta.

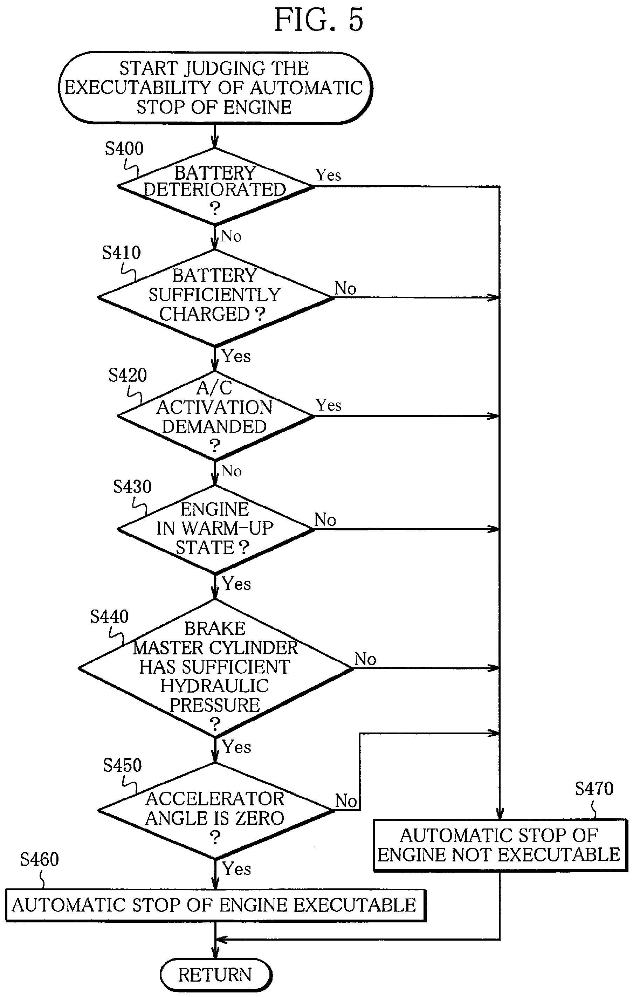

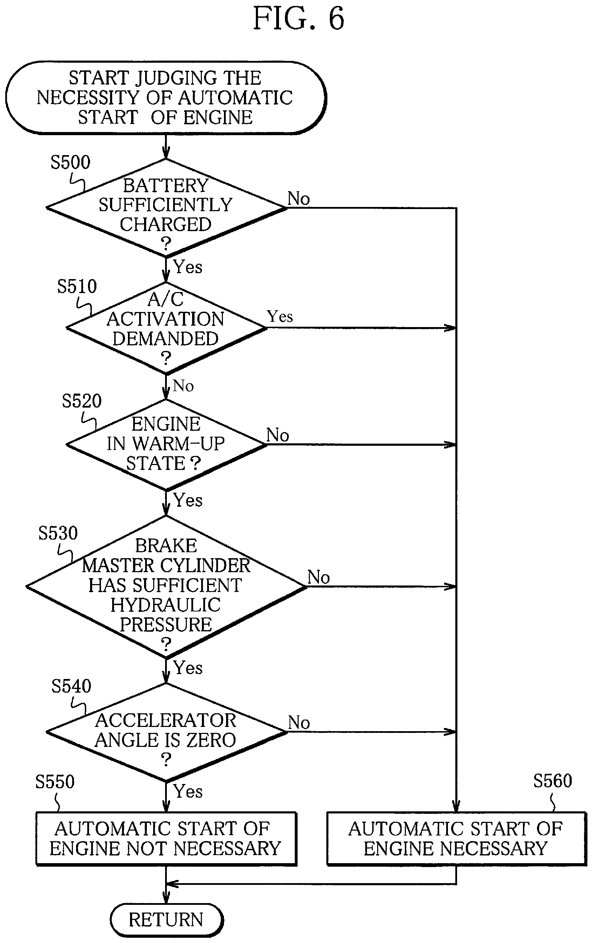

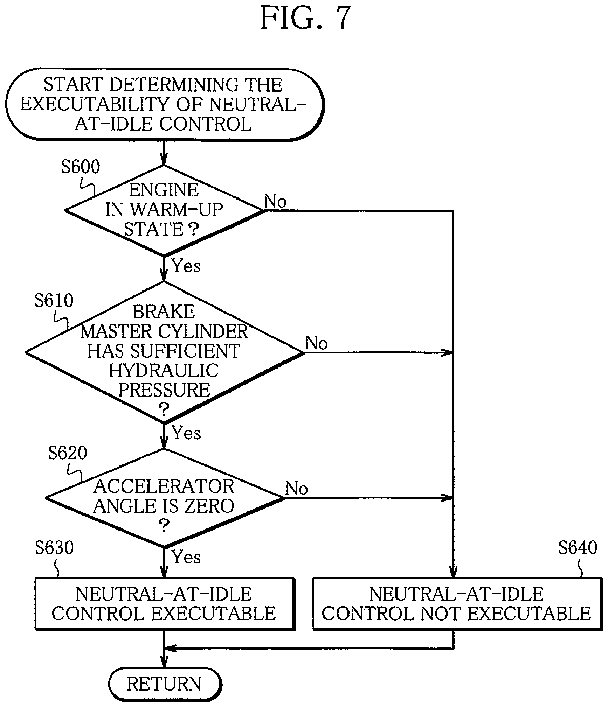

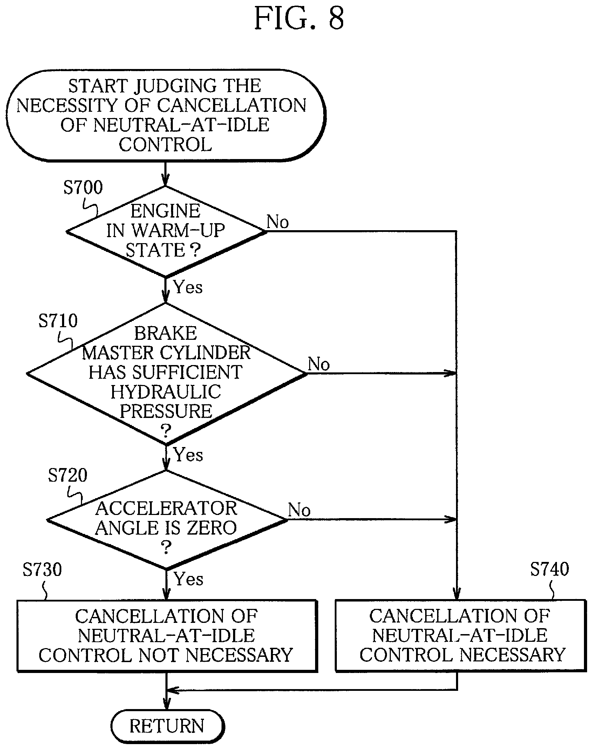

FIG. 5 is a flowchart showing a subroutine of determination of executability of the automatic stop of the engine. FIG. 6 is a flowchart showing a subroutine of a process of judging the necessity of automatic start of the engine. FIG. 7 is a flowchart showing a subroutine of determination of executability of neutral-at-idle control. FIG. 8 is a flowchart showing a subroutine of a process of judging the necessity of cancellation of neutral-at-idle control.

The routines are repeatedly carried out when a vehicle power source is turned on.

In Step S10 shown in FIG. 2, vehicle speed is inputted from the vehicle speed sensor 2. The routine then advances to Step S20.

Step S20 makes a determination as to whether the vehicle is at rest on the basis of the vehicle speed inputted in Step S10.More specifically, it is determined whether the vehicle is at rest on the basis of whether the vehicle speed is zero or equal to or less than a preset value adjacent to zero. If the vehicle is at rest, the routine proceeds to Step S30. If the vehicle is not at rest, the routine moves to Step S80.

In Step S30, the timer 22 measures the post-stop elapsed time Ts that is the time that elapses after the vehicle is stopped. The routine then advances to Step S40.

Step S40 inputs the road surface gradient **θ** from the gradient detector 3. As the road surface gradient **θ**, the inclination angle of the vehicle at the time point when the vehicle is stopped, which is inputted from the gradient detector 3 installed in the vehicle may be inputted. The routine then advances to Step S50.

Step S50 makes a determination as to whether the road surface gradient **θ** is smaller than the predetermined slope **θ**1 inputted in Step S40. The predetermined slope **θ**1 may be set within a range where the idling stop control and the neutral-at-idle control are able to be executed and also in the vicinity of an upper limit value in the range. If the road surface gradient **θ** is smaller than the predetermined slope **θ**1, the routine moves to Step S60. If the road surface gradient **θ** is equal to or larger than the predetermined slope **θ**1, the routine is ended.

Step S60 sets predetermined time Ta that is a threshold value for making a determination in Step S80 on the basis of the road surface gradient **θ** inputted in Step S40. The predetermined time Ta may be set so as to be decreased along with increase in the road surface gradient **θ**. The routine then advances to Step S70.

In Step S70, a determination is made as to whether the post-stop elapsed time Ts measured in Step S30 is equal to or less than the predetermined time Ta. If the post-stop elapsed time Ts is equal to or less than the predetermined time Ta, the routine moves to Step S100 in FIG. 3. If the post-stop elapsed time Ts is more than the predetermined time Ta, the idling stop control is inhibited by the idling stop inhibition controller 23. The routine proceeds to Step S200 in FIG. 4.

Step S80 resets the post-stop elapsed time Ts to zero. The routine is then ended.

Step S100 shown in FIG. 3 carries out the subroutine of determination of executability of the automatic stop of the engine. In this way, it is determined whether the automatic stop of the engine by the idling stop control can be executed. The routine then advances to Step S110.

If, as a result of the process executed in Step S100, Step S110 determines that the automatic stop of the engine can be executed, the routine proceeds to Step S120. If it is determined that the automatic stop of the engine cannot be executed, the routine is ended.

Step S120 carries out the automatic stop of the engine by the idling stop control device. The routine then advances to Step S130.

Step S130 carries out the subroutine of a process of judging the necessity of the automatic start of the engine. In this way, it is determined whether the automatic start of the engine after idling stop is necessary. The routine then moves to Step S140.

If, as a result of the process executed in Step S130, Step S140 determines that the automatic start of the engine is necessary, the routine advances to Step S150. If it is determined that the automatic start of the engine is not necessary, the routine returns to Step S120.

Step S150 carries out the automatic start of the engine. The routine is then ended.

Step S200 shown in FIG. 4 carries out the subroutine of a process of judging the executability of neutral-at-idle control, which is shown in FIG. 7, and makes a determination as to whether the neutral-at-idle control can be executed. The routine then moves to Step S210.

If, as a result of the process executed in Step S200, Step S210 determines that the neutral-at-idle control can be executed, the routine proceeds to Step S220. If the neutral-at-idle control cannot be executed, the routine is ended.

Step S220 carries out the neutral-at-idle control by the neutral-at-idle controller 21. The routine then proceeds to Step S230.

Step S230 carries out the subroutine of a process of judging the necessity of cancellation of neutral-at-idle control. In this way, it is determined whether the cancellation of the neutral-at-idle control is necessary. The routine then advances to Step S240.

If, as a result of the process executed in Step S230, Step S240 determines that the cancellation of the neutral-at-idle control is necessary, the routine proceeds to Step S250. If it is determined that the cancellation of the neutral-at-idle control is not necessary, the routine proceeds to Step S260.

Step S250 cancels the neutral-at-idle control. The routine is then ended.

In Step S260, a determination is made as to whether it is determined that the automatic stop of the engine can be executed by the process of determination of executability of the automatic stop of the engine, which is shown by FIG. 5, before the predetermined time Ta elapses after the vehicle is stopped. If it is never determined that the automatic stop of the engine can be executed before the predetermined time Ta elapses after the vehicle is stopped, the routine moves to Step S270. If it is determined even once that the automatic stop can be executed, the routine proceeds to Step S290.

In Step S270, vehicle speed V is inputted from the vehicle speed sensor 2. The routine then advances to Step S280.

Step S280 makes a determination as to whether the vehicle speed V inputted in Step S270 is equal to or higher than predetermined speed V1. It is considered annoying to the driver if idling stop is executed each time the vehicle runs at a creep speed as in the case where the vehicle is put into a garage. For this reason, the predetermined speed V1 may be set at a speed higher than the creep speed. If the vehicle speed V is equal to or higher than the predetermined speed V1, the routine proceeds to Step S290. If the vehicle speed V is lower than the predetermined speed V1, the routine moves to Step S270. The controls executed in Steps S30 to S70 and Steps S260 to S280 correspond to second regulating device of the present invention.

Step S290 carries out the subroutine of determination of executability of the automatic stop of the engine, which is shown in FIG 5. In this way, it is determined whether the automatic stop of the engine by the idling stop control can be executed. The routine then advances to Step S300.

If, as a result of the process executed in Step S290, Step S300 determines that the automatic stop of the engine can be executed, the routine proceeds to Step S310. If it is determined that the automatic stop of the engine cannot be executed, the routine is ended.

Step S310 carries out the automatic stop of the engine by the idling stop controller 20. The routine then advances to Step S320.

Step S320 carries out the subroutine of a process of judging the necessity of the automatic start of the engine, which is shown in FIG. 6. In this way, it is determined whether the automatic start of the engine after the idling stop control is necessary. The routine then advances to Step S330.

If, as a result of the process executed in Step S320, Step S330 determines that the automatic start of the engine is necessary, the routine moves to Step S340. If it is determined that the automatic start of the engine is not necessary, the routine returns to Step S310.

Step S340 carries out the automatic start of the engine by the idling stop controller 20. The routine is then ended.

FIG. 5 is a flowchart showing a subroutine of a process of judging the executability of the automatic stop of the engine.

As shown in FIG. 5, the process of determination of executability of the automatic stop of the engine firstly makes a determination in Step S400 as to whether the battery is deteriorated. More specifically, it is determined whether the vehicle battery has an internal resistance lower than 10 m**Ω**. If the internal resistance is lower than 10 m**Ω**, it is determined that the battery is not deteriorated. The routine proceeds to Step S410.

Step S410 makes a determination as to whether the battery is sufficiently charged. More specifically, it is determined whether a charge amount of the vehicle battery is equal to or larger than 80 percent. If the charge amount is equal to or larger than 80 percent, it is determined that the battery is sufficiently charged. The routine then moves to Step S420.

Step S420 makes a determination as to whether the activation of the air conditioner is demanded. It is determined whether the activation switch of the air conditioner is in an OFF position. If the switch is OFF, it is determined that the activation of the air conditioner is not demanded, and the routine proceeds to Step S430.

Step S430 makes a determination as to whether the engine 11 is in a warm-up state. It is determined whether the coolant temperature inputted from the coolant temperature sensor 5 is equal to or higher than 60°C. If the temperature is equal to or higher than 60°C, it is determined that the engine 11 is in the warm-up state. The routine then moves to Step S440.

Step S440 makes a determination as to whether the brake master cylinder of the vehicle service brake has a sufficient hydraulic pressure. It is determined whether the hydraulic pressure P of the brake master cylinder, which is inputted from the braking pressure sensor 4, is equal to or higher than reference braking pressure Ps (0.5 MPa, for example). If the hydraulic pressure P is equal to or higher than the reference braking pressure Ps, it is determined that the hydraulic pressure is sufficient. The routine then advances to Step S450.

Step S450 makes a determination as to whether the accelerator angle inputted from the accelerator angle sensor 6 is zero. If the accelerator angle is zero, the routine proceeds to Step S460.

Step S460 determines that the automatic stop of the engine can be executed. The subroutine then returns.

The routine advances to Step S470 if Step S400 determines that the battery internal resistance is equal to or higher than 10 m**Ω**, if Step S410 determines that the battery charge amount is smaller than 80 percent, if Step S420 determines that the activation switch of the air conditioner is ON, if Step S430 determines that the coolant temperature is lower than 60°C, if Step S440 determines that the hydraulic pressure of the brake mastering cylinder is lower than 0.5 MPa or if Step S450 determines that the accelerator angle is larger than zero.

Step S470 determines that the automatic stop of the engine cannot be executed. The subroutine then returns.

FIG. 6 is a flowchart showing the subroutine of the process of judging the necessity of the automatic start of the engine.

As shown in FIG. 6, the process of judging the necessity of the automatic start of the engine first makes a determination as to whether the battery is sufficiently charged in Step S500. It is determined whether the vehicle battery has a charge amount equal to or larger than 80 percent. If the charge amount is equal to or larger than 80 percent, it is determined that the battery is sufficiently charged. The routine then moves to Step S510.

Step S510 makes a determination as to whether the activation of the air conditioner is demanded. It is determined whether the activation switch of the air conditioner is in the OFF position. If the switch is OFF, it is determined that the activation of the air conditioner is not demanded, and the routine proceeds to Step S520.

Step S520 makes a determination as to whether the engine 11 is in the warm-up state. It is determined whether the coolant temperature inputted from the coolant temperature sensor 5 is equal to or higher than 60°C. If the temperature is equal to or higher than 60°C, it is determined that the engine 11 is in the warm-up state. The routine then moves to Step S530.

Step S530 makes a determination as to whether the brake master cylinder of the vehicle service brake has sufficient hydraulic pressure. It is determined whether the hydraulic pressure P of the brake master cylinder, which is inputted from the braking pressure sensor 4, is equal to or higher than the reference braking pressure Ps (0.5 MPa, for example). If the hydraulic pressure P is equal to or higher than the reference braking pressure Ps, it is determined that the hydraulic pressure is sufficient. The routine then advances to Step S540.

Step S540 makes a determination as to whether the accelerator angle is zero. If the accelerator angle is zero, the routine proceeds to Step S550.

Step S550 determines that the automatic start of the engine is not necessary. The subroutine then returns.

The routine advances to Step S560 if Step S500 determines that the battery charge amount is smaller than 80 percent, if Step S510 determines that the activation switch of the air conditioner is ON, if Step S520 determines that the coolant temperature is lower than 60°C, if Step S530 determines that the hydraulic pressure P of the brake mastering cylinder is lower than the reference braking pressure Ps or if Step S540 determines that the accelerator angle is larger than zero.

Step S560 determines that the automatic start of the engine is necessary. The subroutine then returns.

FIG. 7 is a flowchart showing the subroutine of the process of determination of the executability of the neutral-at-idle control.

As shown in FIG. 7, the process of determination of executability of the neutral-at-idle control first makes a determination as to whether the engine 11 is in the warm-up state in Step S600. It is determined whether the coolant temperature inputted from the coolant temperature sensor 5 is equal to or higher than 60°C. If the temperature is equal to or higher than 60°C, it is determined that the engine 11 is in the warm-up state. The routine then moves to Step S610.

Step S610 makes a determination as to whether the brake master cylinder of the service brake has sufficient hydraulic pressure. It is determined whether the hydraulic pressure P of the brake master cylinder, which is inputted from the braking pressure sensor 4, is equal to or higher than reference braking pressure Pn (0.2 MPa, for example). If the hydraulic pressure P is equal to or higher than the reference braking pressure Pn, it is determined that the hydraulic pressure is sufficient. The routine then advances to Step S620.

Step S620 makes a determination as to whether the accelerator angle inputted from the accelerator angle sensor 6 is zero. If the accelerator angle is zero, the routine proceeds to Step S630.

Step S630 determines that the neutral-at-idle control can be executed. The subroutine then returns.

The routine advances to Step S640 if Step S600 determines that the coolant temperature of the engine is lower than 60°C, if Step S610 determines that the hydraulic pressure P of the brake mastering cylinder is lower than the reference braking pressure Pn or if Step S620 determines that the accelerator angle is larger than zero.

Step S640 determines that the neutral-at-idle control can be executed. The subroutine then returns.

FIG. 8 is a flowchart showing the subroutine of the process of judging the necessity of cancellation of neutral-at-idle control.

As shown in FIG. 8, the process of judging the necessity of cancellation of neutral-at-idle control first makes a determination as to whether the engine 11 is in the warm-up state in Step S700. It is determined whether the coolant temperature inputted from the coolant temperature sensor 5 is equal to or higher than 60°C. If the temperature is equal to or higher than 60°C, it is determined that the engine 11 is in the warm-up state. The routine then moves to Step S710.

Step S710 makes a determination as to whether the brake master cylinder of the service brake has sufficient hydraulic pressure. It is determined whether the hydraulic pressure P of the brake master cylinder, which is inputted from the braking pressure sensor 4, is equal to or higher than the reference braking pressure Pn (0.2 MPa, for example). If the hydraulic pressure P is equal to or higher than the reference braking pressure Pn, it is determined that the hydraulic pressure is sufficient. The routine then advances to Step S720.

Step S720 makes a determination as to whether the accelerator angle inputted from the accelerator angle sensor 6 is zero. If the accelerator angle is zero, the routine proceeds to Step S730.

Step S730 determines that the cancellation of the neutral-at-idle control is not necessary. The subroutine then returns.

The routine advances to Step S740 if Step S700 determines that the coolant temperature of the engine is lower than 60°C, if Step S710 determines that the hydraulic pressure P of the brake mastering cylinder is lower than the reference braking pressure Pn or if Step S720 determines that the accelerator angle is larger than zero.

Step S740 determines that the cancellation of the neutral-at-idle control is necessary. The subroutine then returns.

By executing the controls as described above, the embodiment regulates the idling stop control and the neutral-at-idle control if the road surface gradient **θ** is equal to or larger than the predetermined slope **θ**1 when the vehicle is stopped. Even if the other idling stop conditions and neutral control conditions are satisfied, the automatic stop of the engine 11 and the neutral control are regulated. It is thus possible to prevent an unanticipated movement of the vehicle, namely, downward sliding of the vehicle, which occurs when the idling stop control and the neutral-at-idle control are executed when the vehicle is stopped in a greatly inclined place.

According to the embodiment, if the idling stop conditions are not satisfied before the predetermined time Ta elapses after the vehicle is stopped, the idling stop control is disabled until the vehicle V becomes equal to or higher than the predetermined speed V1. If the idling stop conditions are not satisfied before the predetermined time Ta elapses after the vehicle is stopped, there is the possibility that the hydraulic pressure of the brake master cylinder of the vehicle is not sufficient. However, since the automatic stop is regulated until the vehicle speed V becomes equal to or higher than the predetermined speed V1, and the vehicle moves and then stops again, that is, until there is the possibility the hydraulic pressure is obtained, it is possible to prevent the driver from releasing the service brake after stopping the vehicle on the sloping ground and thus to reliably prevent the vehicle from making an unanticipated movement. In particular, it is possible to prevent without fail an unanticipated movement of the vehicle, which is likely to occur on the sloping ground such as in the case where the vehicle is being towed or carrying a large load. It is desirable that the control for regulating the idling stop control after the predetermined time Ta elapses from the time point when the vehicle is stopped be executed only if the road surface gradient **θ** is smaller than the predetermined slope **θ**1.

The road surface gradient **θ** is used not only when a determination is made as to whether the idling stop control should be regulated but also when the predetermined time Ta is set, which is a time period measured after the vehicle is stopped and in which it is determined whether the idling stop conditions are never satisfied. Consequently, the regulation of the idling stop control is more reliably carried out. If the idling stop conditions are never satisfied within a short elapsed time after the vehicle is stopped, the regulation of the idling stop control is continued. On this account, the regulation of the idling stop control is becoming hard to cancel along with increase in the road surface gradient **θ**. It is therefore possible to more reliably prevent an unanticipated movement of the vehicle.

According to the embodiment, if the idling stop conditions are not satisfied before the predetermined time Ta elapses after the vehicle is stopped, the automatic stop of the engine is regulated until the vehicle speed V becomes equal to or higher than the predetermined speed V1. However, if the neutral control conditions are not satisfied before the predetermined time Ta elapses after the vehicle is stopped, the neutral-at-idle control may be regulated until the vehicle speed V becomes equal to or higher than the predetermined speed V1. In either way, it is possible to reliably prevent an unanticipated movement of the vehicle, which occurs because the neutral-at-idle control is executed on the sloping ground when the vehicle is stopped.

Moreover, if the vehicle is equipped with the idling stop control device only, the routine may be ended when the post-stop elapsed time Ts is more than the predetermined time Ta in Step S70 shown in FIG. 2. This way, if the idling stop conditions are not satisfied before the predetermined time Ta elapses after the vehicle is stopped, the idling stop control is regulated. In result, an unanticipated movement of the vehicle can be prevented when the idling stop control is executed on the sloping ground.

## Claims

1. A control apparatus for a vehicle with an automatic transmission (12), comprising:
an idling stop control device (20) for reducing consumed fuel of an internal combustion engine (11) of a vehicle when predetermined conditions are satisfied, which include at least a condition that the vehicle is at rest;
a road surface gradient detector (3) for detecting the slope of the ground surface on which the vehicle is stopped;
a standing time measuring unit (22) for measuring the time that elapses after the vehicle is stopped; and
an idling stop inhibition controller (23) for regulating the consumed fuel reduction performed by the idling stop control device (20), **characterized in that**:
the idling stop inhibition controller (23) inhibits the idling stop control executed by the idle stop control device (20) if the road surface gradient detector (3) determines that the vehicle is on a slope way and if the stop time measured by the standing time measuring unit (22) is more than predetermined time, and
the predetermined time is designed to decrease along with increase in the road surface gradient detected by the road surface gradient detector.

2. The control apparatus for a vehicle according to claim 1, **characterized in that**:
if the road surface gradient detected by the road surface gradient detector is larger than the predetermined value, the idling stop inhibition controller (23)regulates the consumed fuel reduction made by the idling stop control device (20), regardless of the stop time.

## Patentansprüche

1. Steuervorrichtung für ein Fahrzeug mit einem Automatikgetriebe (12), mit:
einer Leerlaufstoppsteuereinrichtung (20) zum Vermindern des Kraftstoffverbrauchs eines Verbrennungsmotors (11) eines Fahrzeugs, wenn vorgegebene Bedingungen erfüllt sind, die mindestens die Bedingung enthalten, dass das Fahrzeug stillsteht;
einem Straßenoberflächengradientendetektor (3) zum Erfassen der Neigung der Bodenoberfläche, auf der das Fahrzeug angehalten hat;
einer Standzeitmesseinheit (22) zum Messen der Zeit, die verstreicht, nachdem das Fahrzeug angehalten hat; und
einer Leerlaufstoppunterdrückungssteuereinheit (23) zum Regeln der durch die Leerlaufstoppsteuereinrichtung (20) ausgeführten Verminderung des Kraftstoffverbrauchs,
**dadurch gekennzeichnet, dass**
die Leerlaufstoppunterdrückungssteuereinheit (23) die durch die Leerlaufstoppsteuereinrichtung (20) ausgeführte Leerlaufstoppsteuerung unterdrückt, wenn der Straßenoberflächengradientendetektor (3) bestimmt, dass sich das Fahrzeug auf einer abschüssigen Strecke befindet, und wenn die durch die Standzeitmesseinheit (22) gemessene Stoppzeit länger ist als eine vorgegebene Zeit, wobei die vorgegebene Zeit so festgelegt ist, dass sie mit zunehmendem, durch den Straßenoberflächengradientendetektor erfassten Straßenoberflächengradienten, abnimmt.

2. Steuervorrichtung für ein Fahrzeug nach Anspruch 1, **dadurch gekennzeichnet, dass**:
wenn der durch den Straßenoberflächengradientendetektor erfasste Straßenoberflächengradient größer ist als der vorgegebene Wert, die Leerlaufstoppunterdrückungssteuereinheit (23) die durch die Leerlaufstoppsteuereinrichtung (20) veranlasste Verminderung des Kraftstoffverbrauchs unabhängig von der Stoppzeit reguliert.

## Revendications

1. Appareil de commande pour un véhicule avec une transmission automatique (12), comprenant :
un dispositif de commande d'arrêt au ralenti (20) pour réduire le carburant consommé d'un moteur à combustion interne (11) d'un véhicule lorsque des conditions prédéterminées sont satisfaites, qui comprennent au moins une condition dans laquelle le véhicule est à l'arrêt ;
un détecteur de gradient de surface de route (3) pour détecter la pente de la surface de sol sur laquelle le véhicule est arrêté ;
une unité de mesure de temps de stationnement (22) pour mesurer le temps qui s'est écoulé après que le véhicule a été arrêté ; et
un organe de commande d'inhibition d'arrêt au ralenti (23) pour réguler la réduction de carburant consommé réalisée par le dispositif de commande d'arrêt au ralenti (20), **caractérisé en ce que** :
l'organe de commande d'inhibition d'arrêt au ralenti (23) empêche la commande d'arrêt au ralenti exécutée par le dispositif de commande d'arrêt au ralenti (20) si le détecteur de gradient de surface de route (3) détermine que le véhicule est sur une pente et si le temps d'arrêt mesuré par l'unité de mesure de temps de stationnement (22) est supérieur au temps prédéterminé, et
le temps prédéterminé est conçu pour diminuer conjointement avec l'augmentation du gradient de surface de route détecté par le détecteur de gradient de surface de route.

2. Appareil de commande pour un véhicule selon la revendication 1, **caractérisé en ce que** :
si le gradient de surface de route détecté par le détecteur de gradient de surface de route est supérieur à la valeur prédéterminée, l'organe de commande d'inhibition d'arrêt au ralenti (23) régule la réduction de carburant consommé réalisée par le dispositif de commande d'arrêt au ralenti (20), indépendamment du temps d'arrêt.
